# EUROPEAN PATENT APPLICATION

(11) **EP 1 588 756 A1**
(43) Date of publication of application: **26.10.2005**
(21) Application number: 05250758.9
(22) Date of filing: 10.02.2005
(51) Int. Cl.: B01D 69/06, B01D 69/12, G01N 27/40

(54) **Bilayer lipid membrane forming device and bilayer lipid membrane forming method**

(30) Priority: 29.03.2004 JP 2004096881
(71) Applicant: KABUSHIKI KAISHA TOSHIBA, Tokyo 105-8001 (JP)
(72) Inventor: Kinpara, Takeshi, Toshiba Corporation, Minato-ku Tokyo (JP); Noritomi, Yasuko Toshiba Corporation, Minato-ku Tokyo (JP); Kawano, Koichiro, Toshiba Corporation, Minato-ku Tokyo (JP); Ishimori, Yoshio, Toshiba Corporation, Minato-ku Tokyo (JP)
(74) Representative: Granleese, Rhian Jane

(57) **Abstract**

A device for forming a bilayer lipid membrane from a lipid membrane, including: a first solution container (3) which contains a first solution; a second solution container (4) which contains a second solution; a partition wall (5) which is located between the first solution container (3) and the second solution container (4), and has a hole; a mechanism which applies a lipid solution to the hole; and a mechanism which provides a physical stimulus to a lipid membrane formed in the hole.

## Description

### CROSS REFERENCE TO RELATED APPLICATIONS

This application is based upon and claims the benefit of priority from prior Japanese Patent Application P2004-096881 filed on March 29, 2004; the entire contents of which are incorporated by reference herein.

### BACKGROUND OF THE INVENTION

### 1. Field of the Invention

The present invention relates to a bilayer lipid membrane forming device and a bilayer lipid membrane forming method.

### 2. Description of the Related Art

There are known lipid membrane forming methods. One method, called "black membrane method", includes applying, by a brush or such, a solution of lipid dissolved in an organic solvent to a hole in water, and waiting a natural formation of bilayer lipid membrane. Another, called "LB membrane method", includes preparing pieces of lipid monomolecular membrane on a water surface, restricting the spreading area of lipid to hold an adequate density of monomolecular membrane, and, under that condition, dipping a board with a hole into water from above the monomolecular membrane, thereby forming a bilayer lipid membrane. Such methods each need skilled operations, which constitute a difficulty in industrial application.

There are disclosed bilayer lipid membrane forming devices (e.g. Japanese Patent Laid-Open No. 2001-91494 and No. 2003-194772), as sensors making use of lipid membrane, in which a lipid membrane is prepared by a lipid solution ejection nozzle in a water solution, and in course of an automatic formation of bilayer lipid membrane. In those devices, a bilayer lipid membrane is employed as a sensor probe for detecting a solute in a sample solution in an electrochemical manner. Typically, such a device includes water tanks, with a partition wall in between and is configured to form, in part the partition wall, a bilayer lipid membrane interactive with the toxic substances by electrodes measuring a potential difference between a reference solution and a sample solution, with a partition wall in between.

The above described bilayer lipid membrane forming methods are similar in techniques to the black membrane method, so that the lipid membrane to be initially prepared is a solvent-containing thick membrane. In due course, by a natural thinning of lipid membrane, there is formed a bilayer lipid membrane (a black membrane) from the initial lipid membrane via a multilayer lipid membrane (a membrane with iridescent patterns), while needing a long time to elapse for the transformation into bilayer lipid membrane, due to the thinning of membrane to be developed with a diffusion of lipid-dissolving solvent.

In other words, bilayer lipid membrane forming methods in the past have been disclosed in the form of a mechanical automation of the application of a lipid solution to a hole, which was a manual operation in black membrane methods in the past. Though a great effect is achieved for repeatability of operation, it still takes time to finally obtain a bilayer lipid membrane.

### SUMMARY OF THE INVENTION

A first aspect of the present invention is to provide a device for forming a bilayer lipid membrane from a lipid membrane, including: a) a first solution container which contains a first solution; b) a second solution container which contains a second solution; c) a partition wall which is located between the first solution container and the second solution container, and has a hole; d) a mechanism which applies a lipid solution to the hole; and, e) a mechanism which provides a physical stimulus to a lipid membrane formed in the hole.

A second aspect of the present invention is to provide a device for forming a bilayer lipid membrane from a lipid membrane, including: a) a first solution container which contains a first solution; b) a second solution container which contains a second solution; c) a partition wall which is located between the first solution container and the second solution container, and has a hole; d) means for applying a lipid solution to the hole; and, e) means for providing a physical stimulus to a lipid membrane formed in the hole.

A third aspect of the present invention is to provide a method for forming a bilayer lipid membrane from a lipid membrane, including: a) applying a lipid solution to a partition wall which is located between a first solution container which contains a first solution and a second solution container which contains a second solution, and has a hole; and, b) providing a physical stimulus to a lipid membrane formed in the hole.

### BRIEF DESCRIPTION OF DRAWINGS

Fig. 1 is a schematic block diagram of a bilayer lipid membrane forming device according to a first embodiment (No. 1).
Fig. 2 is a schematic block diagram of the bilayer lipid membrane forming device according to the first embodiment (No. 2).
Fig. 3 is a schematic block diagram of the bilayer lipid membrane forming device according to the first embodiment (No. 3).
Fig. 4 is a flow chart of the bilayer lipid membrane forming method according to the first embodiment (No. 1).
Fig. 5 is a flow chart of the bilayer lipid membrane forming method according to the first embodiment (No. 2).
Fig. 6 is a schematic block diagram of a bilayer lipid membrane forming device according to a second embodiment (No. 1).
Fig. 7 is a schematic block diagram of the bilayer lipid membrane forming device according to the second embodiment (No. 2).
Fig. 8 is a schematic block diagram of the bilayer lipid membrane forming device according to the second embodiment (No. 3).
Fig. 9 is a flow chart of a bilayer lipid membrane forming method according to second or third embodiment.
Fig. 10 is a schematic block diagram of a bilayer lipid membrane forming device according to the third embodiment (No. 1).
Fig. 11 is a schematic block diagram of the bilayer lipid membrane forming device according to the third embodiment (No. 2).
Fig. 12 is a schematic block diagram of the bilayer lipid membrane forming device according to the third embodiment (No. 3).
Figs. 13A to 13D are a series of optical microscope photographs showing phases of a formation of bilayer lipid membrane in the first embodiment.
Figs. 14A to 14D are a series of optical microscope photographs showing phases of a formation of bilayer lipid membrane in the second embodiment.
Figs. 15A to 15D are a series of optical microscope photographs showing phases of a formation of a bilayer lipid membrane in the third embodiment.

### DETAILED DESCRIPTION OF THE INVENTION

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

In first to third embodiments, a bilayer lipid membrane forming device adapted for a rapid formation of a bilayer lipid membrane from a lipid membrane is explained. The bilayer lipid membrane forming device is adapted, in a course of formation including a preparation of the lipid membrane by a lipid solution applying mechanism, to promote thinning the lipid membrane by giving a physical stimulus to the lipid membrane.

### (FIRST EMBODIMENT)

### (Bilayer lipid membrane forming device)

In the first embodiment, description will be given of a bilayer lipid membrane forming device adapted, in use of a difference in pressure between a sample solution and a reference solution, to provide a stimulus to promote a transformation of a lipid membrane into a bilayer lipid membrane.

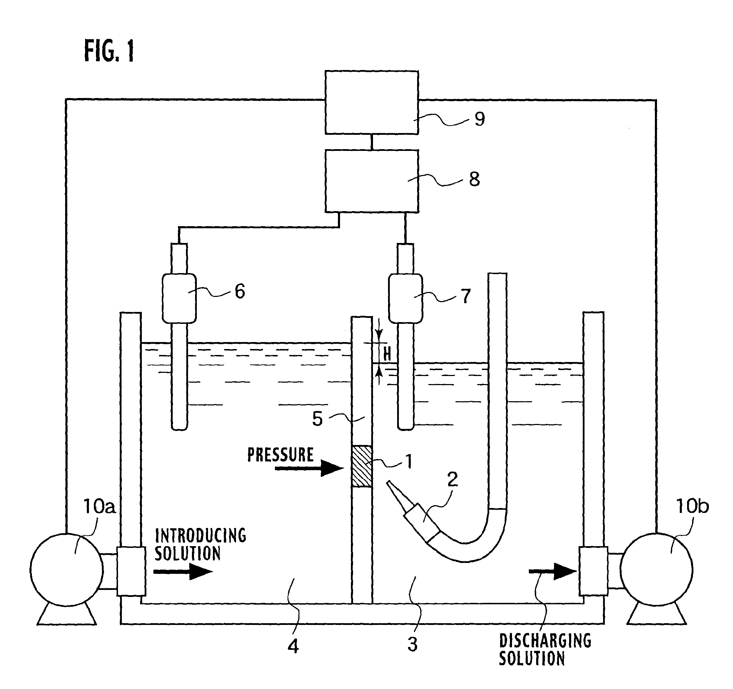

As shown in Fig. 1, the bilayer lipid membrane forming device according to the first embodiment includes a sample solution container (as a first solution container) 3 which contains a sample solution (as a first solution), a reference solution container (as a second solution container) 4 which contains a reference solution (as a second solution), a partition wall 5 which is located between the sample solution container 3 and the reference solution container 4, and has a hole, a mechanism (configured with e.g. a lipid solution ejection nozzle 2) which applies a lipid solution to the hole, a mechanism (configured with e.g. an electrode 6, an electrode 7, and a measuring unit 8) which measures a potential difference between the sample solution and the reference solution and detects dissolved substances in the sample solution, and a mechanism (configured with e.g. a pump 10a and a pump 10b) which provides a difference in pressure between the sample solution and the reference solution. Fig. 1 shows a lipid membrane 1 prepared in the hole, which is initially thick, but transforms into a thin bilayer lipid membrane with a lapse of time.

The electrode 7 is provided in the sample solution container 3, to be dipped in the sample solution. Similarly, the electrode 6 is provided in the reference solution container 4, to be dipped in the reference solution. The measuring unit 8 is adapted, by the electrodes 6 and 7, to measure a potential difference (that is, a membrane potential) between the sample solution and the reference solution, which are separated from each other by the lipid membrane 1. As the measuring unit 8, for example, an electrometer may be used. Data obtained by this measuring unit 8 can be recorded by a recorder (not shown). A controller 9 controls the measuring unit 8, the pump 10a, and the pump 10b, which will be further described. The sample solution may be underground water, and detecting mechanism may detect the kind of a solute such as toxic substances in the underground water.

In the sample solution container 3 is provided with a sample solution distribution port (not shown) and the sample solution is supplied and discharged through the sample solution distribution port. The bilayer lipid membrane forming device according to the first embodiment is adapted a structure which includes a plurality of distribution ports that is inlets and outlets, and the solution movement may be performed simultaneously and continuously. Similarly, the reference solution container 4 is provided with a reference solution distribution port (not shown), and the reference solution is supplied and discharged through the reference solution distribution port. The bilayer lipid membrane forming device according to the first embodiment is adapted to a structure which includes a plurality of distribution ports that is inlets and outlets, and the solution movement may be performed simultaneously and continuously. In such manner, the potential difference between the sample solution and the reference solution is measured while a flow of the sample solution, continuously comes into contact with the bilayer lipid membrane. Thus, dissolved manner in the sample solution can be continuously detected.

The partition wall 5 is located between the sample solution container 3 and the reference solution container 4 and is formed of, for example, poly-tetra-flouoro-ethylene ((-CF₂-CF₂-)ₙ) with a thickness of about 25 µm. The partition wall 5 has at least one hole in which the bilayer lipid membrane is formed. The hole is a circular form, and has a diameter of 200 to 1000 µm and a depth of about 25 µm.

The lipid solution ejection nozzle 2 is an inkjet-type device, which ejects a lipid solution to the hole of the partition wall 5 by a jet stream or the like to form the bilayer lipid membrane in the hole. The bilayer lipid membrane comes to contact with both of the sample solution and the reference solution. In Fig. 1, the lipid solution ejection nozzle 2 is provided in the sample solution container 3, however, the lipid solution ejection nozzle 2 may be provided in the reference solution container 4.

The pump 10a and the pump 10b introduce solution to the sample solution container 3 or the reference solution container 4, or discharge a solution from the sample solution container 3 or the reference solution container 4. The introduced solution is preferably conductible, such as salt solution. However, purified water or the like can be used as the solution. In Fig. 1, the pump 10a is provided in the wall of the reference solution container 4 and the pump 10b is provided in the wall of the sample solution container 3. The controller 9 controls the amount of the introduced or discharged solution and the period of time to introduce or discharge the solution with the pump 10a and the pump 10b. In Fig. 1, the pump 10a introduces a solution to the reference solution container 4, or the pump 10b discharges a solution from the sample solution container 3. Thus, a difference H is generated in the water levels of the sample solution and that of the reference solution. For example, about 50 to 80 Pa of the difference of hydraulic pressure between the sample solution and the reference solution is a preferable pressure. When a difference in pressure between the sample solution and the reference solution is generated, the lipid membrane bends to the solution in lower pressure (the side of the sample solution, in Fig. 1). Thus, an excess lipid solution is removed and transformation to a bilayer lipid membrane is promoted.

A conventional reference solution pump, which provides movements of the reference solution, may operate as the pump 10a. Similarly, a conventional sample solution pump, which provides movements of the sample solution, may operate as the pump 10b.

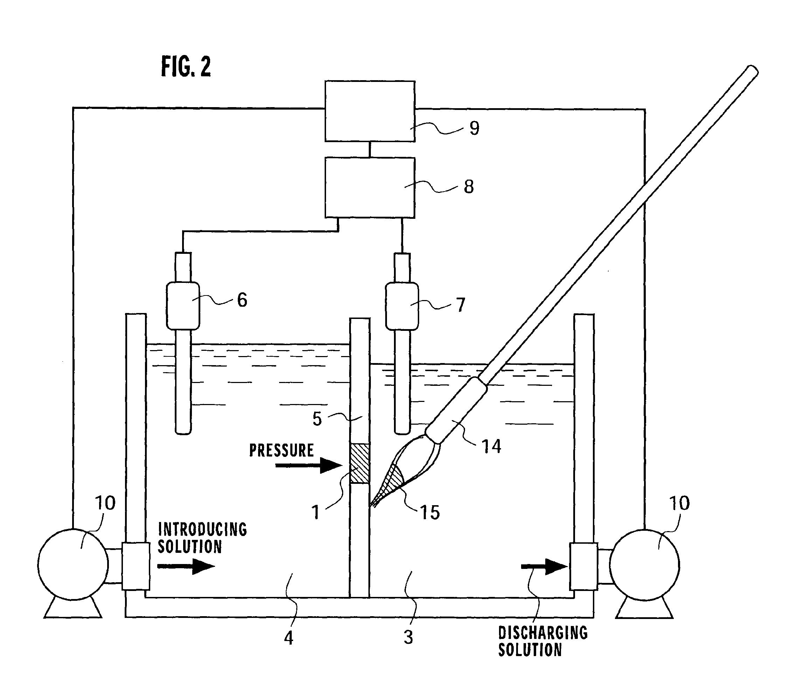

The bilayer lipid membrane forming device according to the first embodiment, as shown in Fig. 2, may include a lipid applying brush 14 as a mechanism for applying the lipid solution to the hole. A lipid solution 15 is adhered to the brush and applied directly to the hole by the lipid applying brush 14 to form the lipid membrane 1.

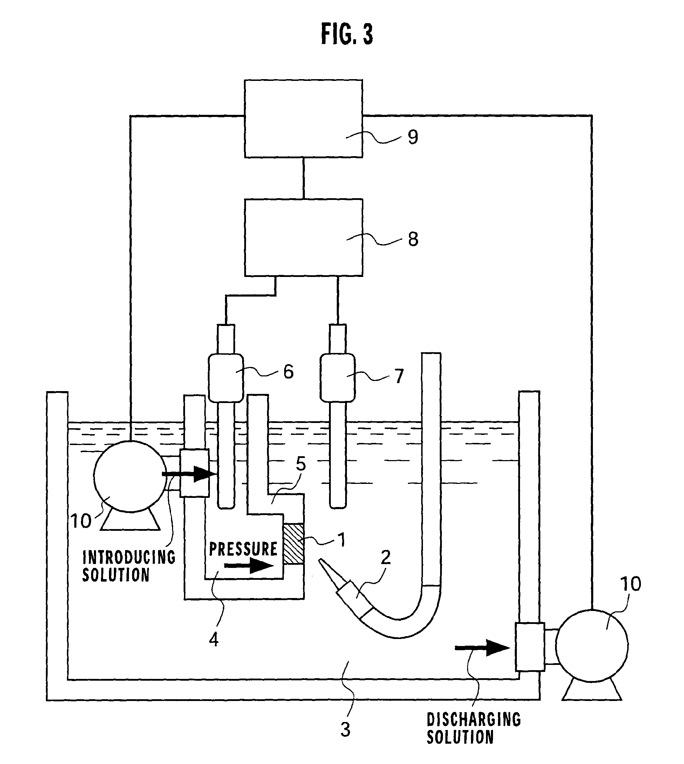

Furthermore, as shown in Fig. 3, the bilayer lipid membrane forming device according to the first embodiment may include the sample solution container 3 and the reference solution container 4 in different shapes. As shown in Fig. 3, the reference solution container 4 may be downsized and provided inside of the sample solution container 3.

Note that the bilayer lipid membrane operates as a sensor probe for detecting the presence of the dissolved substance and its concentration in the sample solution by using some change of the bilayer lipid membrane (for example, changes in membrane potential, electric capacity, ion permeability, light emission, heat generation, absorption of heat and the like) which are caused by an action of a dissolved substance in the sample solution. As such a bilayer lipid membrane, enumerated are: a bilayer lipid membrane substantially including only lipid; a bilayer lipid membrane having molecules of various proteins, sugar and the like, which adhere thereto and are mixed therein; and the like. The kinds and amounts of the lipid, proteins and sugar, a method for preparing the bilayer lipid membrane and the like are appropriately selected. Thus, various sensors can be prepared corresponding to specific contents including a measurement purpose, a sample solution and the like.

As a preferable lipid used for the bilayer lipid membrane forming device according to the first embodiment, enumerated are: artificial lipid such as mono-olein; or a naturally occurring lipid such as phosphatidylcholine and phosphatidylinositol; and the like.

### (Bilayer lipid membrane forming method)

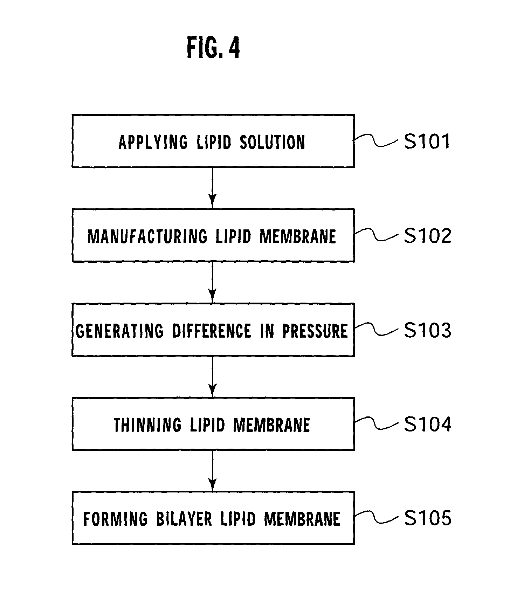

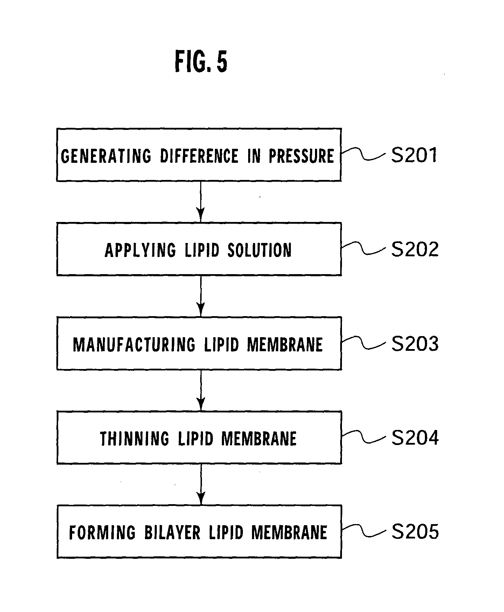

Here, the bilayer lipid membrane forming method according to the first embodiment is described by referring to Fig. 4 and Fig. 5.

Firstly, in step S101 in Fig. 4, a lipid solution is applied to the hole by the lipid solution ejection nozzle 2 or the lipid applying brush 14.

In step S102, a lipid membrane is manufactured in the hole. The measuring unit 8 detects that the lipid membrane 1 is manufactured, by measuring potential changes with the electrode 6 and the electrode 7. The measuring unit 8 notifies to the controller 9 that a lipid membrane 1 is prepared.

In step S103, the controller 9 receives a signal from the measuring unit 8 and drives the pumps 10a and 10b to generate a difference in the water levels of the sample solution and the reference solution. As a consequence of the different water levels, a pressure between a sample solution and a reference solution is generated, which affects the lipid membrane.

Then, in step S104, thinning of the lipid membrane is promoted. In step S105, a bilayer lipid membrane is formed.

As shown in Fig. 5, the difference in pressure between the sample solution and the reference solution may be generated before the lipid membrane is manufactured.

That is, firstly, in step S201 in Fig. 5, the controller 9 drives the pumps 10a and 10b to generate a difference in pressure between the sample solution and the reference solution.

In step S202, a lipid solution is applied to the hole by the lipid solution ejection nozzle 2 or the lipid applying brush 14.

In step S203, a lipid membrane is manufactured.

In step S204, thinning the lipid membrane is promoted. In step S205, a bilayer lipid membrane is formed.

A rapid formation of a bilayer lipid membrane can be achieved in both methods shown in Fig. 4 and Fig. 5.

Furthermore, an optical observation can be used to confirm the manufacturing lipid membrane, in step S102 in Fig. 4.

### (Function and effect)

By use of the bilayer lipid membrane forming device and the bilayer lipid membrane forming method according to the first embodiment, in a course of generating a difference in presser between the sample solution and the reference solution, the lipid membrane 1 bends to the solution in lower pressure. Thus, an excess lipid solution can be removed and transformation of a bilayer lipid membrane is promoted. In other words, a stable bilayer lipid membrane can be formed rapidly.

With a conventional procedure, it takes a number of minutes to several hours for transforming a lipid membrane into a bilayer lipid membrane. However, by use of the bilayer lipid membrane forming device according to the first embodiment, it takes a few seconds to a few minutes for transforming a lipid membrane into a bilayer lipid membrane through a state of a multilayer lipid membrane.

In bilayer lipid membrane forming device according to the first embodiment, a pump for moving a solution to or from the sample solution container 3 or the reference solution container 4 can be employed as a mechanism to generate a difference in pressure. In such a manner, by changing an amount of the sample solution or the reference solution, a difference in pressure between the sample solution and the reference solution can be easily generated. Thus, a rapid formation of a bilayer lipid membrane can be achieved.

As the pumps 10a and 10b, which generate a difference in pressure, a conventional reference solution pump for providing movements of a reference solution and a conventional sample solution pump for providing movements of a sample solution can be employed. Thus, in this case, a difference in pressure between the sample solution and the reference solution can be generated with existing devices, that is, any additional pump is required.

### (SECOND EMBODIMENT)

### (Bilayer lipid membrane forming device)

In the second embodiment, description will be given of a bilayer lipid membrane forming device adapted, in a course of providing physical vibrations to a lipid membrane, to provide a stimulus to promote a transformation of a lipid membrane into a bilayer lipid membrane.

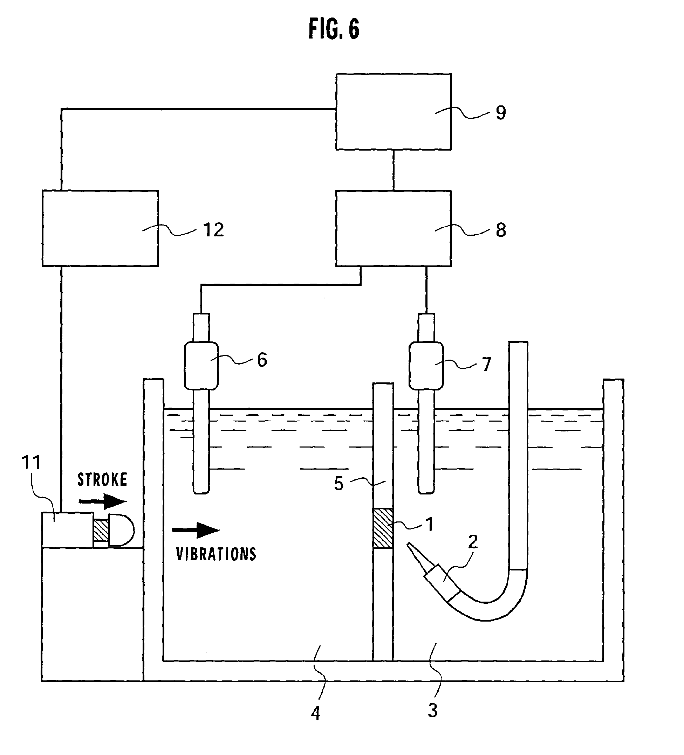

As shown in Fig. 6, a bilayer lipid membrane forming device according to the second embodiment includes a sample solution container (as a first solution container) 3 which contains a sample solution (as a first solution), a reference solution container (as a second solution container) 4 which contains a reference solution (as a second solution), a partition wall 5 which is located between the sample solution container 3 and the reference solution container 4, and has a hole, a mechanism (configured with e.g. a lipid solution ejection nozzle 2) which applies a lipid solution to the hole, a mechanism (configured with e.g. an electrode 6, an electrode 7, and a measuring unit 8) which measures a potential difference between the sample solution and the reference solution and detects dissolved substances in the sample solution, and a mechanism (configured to e.g. a stroke element 11 and a drive unit 12) which vibrates a lipid membrane. Fig. 6 shows a lipid membrane 1 prepared in the hole, which is initially thick, but transforms into a thin bilayer lipid membrane with a lapse of time.

Besides the component described above, a sample solution container 3, a reference solution container 4, a partition wall 5, a lipid solution ejection nozzle 2, an electrode 6, an electrode 7, a measuring unit 8, and a kind of bilayer lipid membrane are the same as those of the first embodiment. Thus, description thereof will be omitted herein.

A controller 9 controls the measuring unit 8 and a drive unit 12, which will be further described.

The stroke element 11 vibrates the lipid membrane 1 and the drive unit 12 controls the movement of the stroke element 11. The stroke element 11, in Fig. 6, vibrates the reference solution container 4 and the vibrations are provided in a direction perpendicular to the partition wall 5. Here, the vibration energy provided to the reference solution container 4 run through the partition wall 5 to the lipid membrane 1 and vibrates the lipid membrane 1. The place where the stroke element 11 vibrates is not limited to the wall of the reference solution container 4. The vibration can be provided to the sample solution container 3 or to other peripheral devices when the vibration finally reaches to the lipid membrane 1.

Concretely, the strength of vibrations provided by the stroke element 11 is not limited when the lipid membrane 1 is vibrated to remove the excess lipid solution from the hole, every time the reference solution container 4, the sample solution container 3 or other peripheral devices are stroked. In other words, the strength of vibrations can be adjusted according to the diameter of the hole, mixture ratio of lipid and solvents, kind of lipid and solvents, the sizes of bilayer lipid membrane, and is not limited when remove the excess lipid solution is removed in the experimental system.

The direction of generating vibrations is not limited when the excess lipid solution can be removed. In the second embodiment, preferably, vibrations are generated in a direction perpendicular or horizontal to the partition wall 5.

As the stroke element 11, concretely, a sprung hammer can be used. As other vibrating mechanisms, vibrations created by a motor with decentering weight, vibrations created by a piezo-actuator, vibrations created by a sound wave from a speaker, or vibrations created by supersonic wave can be used. Other devices can be used as a vibrating mechanism in the bilayer lipid membrane forming device according to the second embodiment when the vibration strength, vibration interval, vibration period and the like can be controlled. Forming a bilayer lipid membrane is promoted by providing these devices to the outer wall of the sample solution container 3 and generating vibrations.

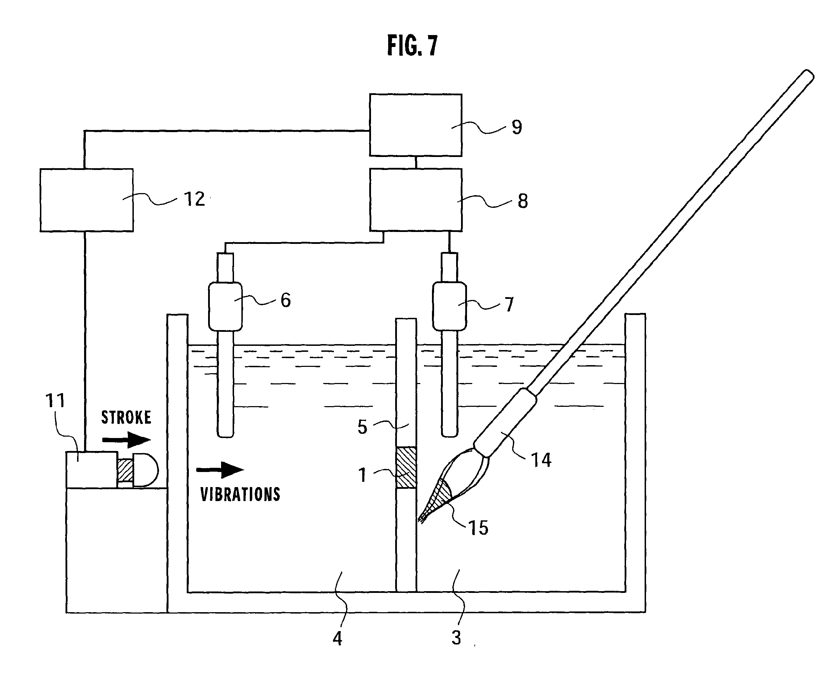

The bilayer lipid membrane forming device according to the second embodiment, as shown in Fig. 7, may include a lipid applying brush 14 as a mechanism for applying the lipid solution to the hole. A lipid solution 15 is adhered to the brush and applied directly to the hole by the lipid applying brush 14 to form the lipid membrane 1.

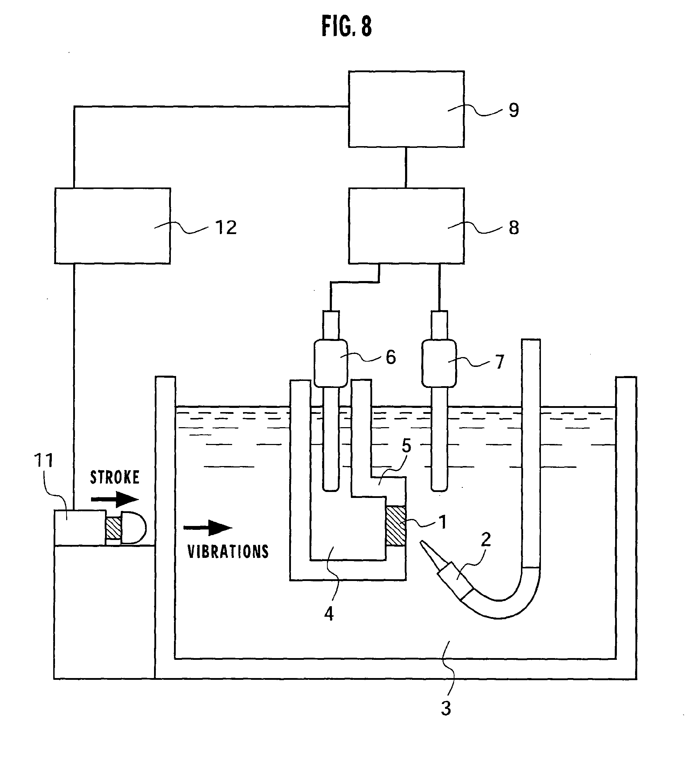

Furthermore, as shown in Fig. 8, the bilayer lipid membrane forming device according to the first embodiment may include the sample solution container 3 and the reference solution container 4 in different shapes. As shown in Fig. 8, the reference solution container 4 may be downsized and provided inside of the sample solution container 3.

### (Bilayer lipid membrane forming method)

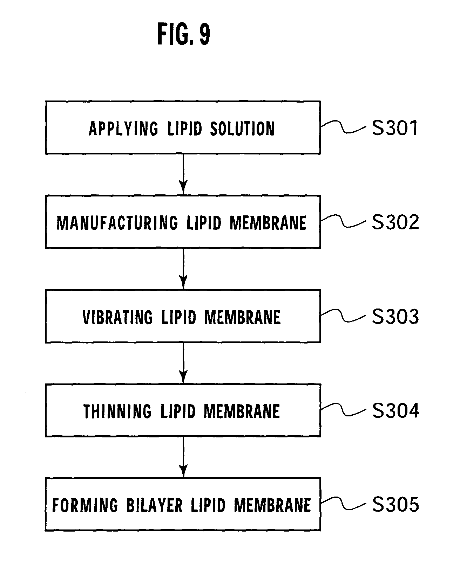

Here, the bilayer lipid membrane forming method according to the second embodiment is described by referring to the Fig. 9.

Firstly, in step S301, a lipid solution is applied to the hole by the lipid solution ejection nozzle 2 or the lipid applying brush 14.

In step S302, a lipid membrane is manufactured in the hole. The measuring unit 8 detects that the lipid membrane 1 is manufactured by measuring potential changes with the electrode 6 and the electrode 7. The measuring unit 8 notifies to a controller 9 that a lipid membrane is prepared.

The controller 9 receives a signal from the measuring unit 8 and transmits a signal to a drive unit 12 to start to drive. In step S303, the drive unit 12 drives a stroke element 11 to generate mechanical vibrations in predetermined vibration strength, vibration interval, and vibration period. For example, vibration may be given to the sample solution container 3 or the reference solution container 4 at intervals of 0.1 to 1.0 second.

In step S304, thinning of the lipid membrane is promoted. In step S305, a bilayer lipid membrane is formed.

The controller 9 receives a signal notifying that a bilayer lipid membrane is formed from the measuring unit 8, and transmits a signal to a drive unit 12 to stop the operation. The drive unit 12 receives the signal from the controller 9 and stops mechanical vibrations of a stroke element 11.

Furthermore, an optical observation can be used to confirm the formation of a lipid membrane and bilayer lipid.

In Fig. 9, the vibrations are stopped after a bilayer lipid membrane is formed, however, the vibrations can be stopped when a multilayer lipid membrane is formed. In this case, after the vibrations are stopped, a multilayer lipid membrane naturally transforms into a bilayer lipid membrane and a bilayer lipid membrane is prepared.

### (Function and effect)

The bilayer lipid membrane forming device and the bilayer lipid membrane forming method according to the second embodiment, an excess lipid solution can be discharged by vibrating a lipid membrane 1. Thus, transforming a lipid membrane into bilayer lipid membrane can be promoted. In other words, a stable bilayer lipid membrane can be formed rapidly.

With a conventional procedure, it takes a number of minutes to several hours for transforming a lipid membrane into a bilayer lipid membrane. However, by use of the bilayer lipid membrane forming device according to the second embodiment, it takes a few seconds to a few minutes for transforming a lipid membrane into a bilayer lipid membrane through a state of a multilayer lipid membrane.

In the bilayer lipid membrane forming device and the bilayer lipid membrane forming method according to the second embodiment, vibrations are given to the sample solution container 3 and the reference solution container 4 and the vibration energy runs through the partition wall 5 to the lipid membrane 1 and vibrates the lipid membrane 1.

In the bilayer lipid membrane forming device and the bilayer lipid membrane forming method according to the second embodiment, the vibration energy can run through to the lipid membrane 1 effectively, when vibrating in a direction of perpendicular or horizontal to the partition wall 5 to transmit the vibrations to the lipid membrane 1.

### (THIRD EMBODIMENT)

### (Bilayer lipid membrane forming device)

In a third embodiment, description will be given of a bilayer lipid membrane forming device adapted to give a stimulus to lipid membrane and promote the thinning of a lipid membrane into a bilayer lipid membrane, by providing physical vibrations to the lipid membrane in different procedures described in the second embodiment.

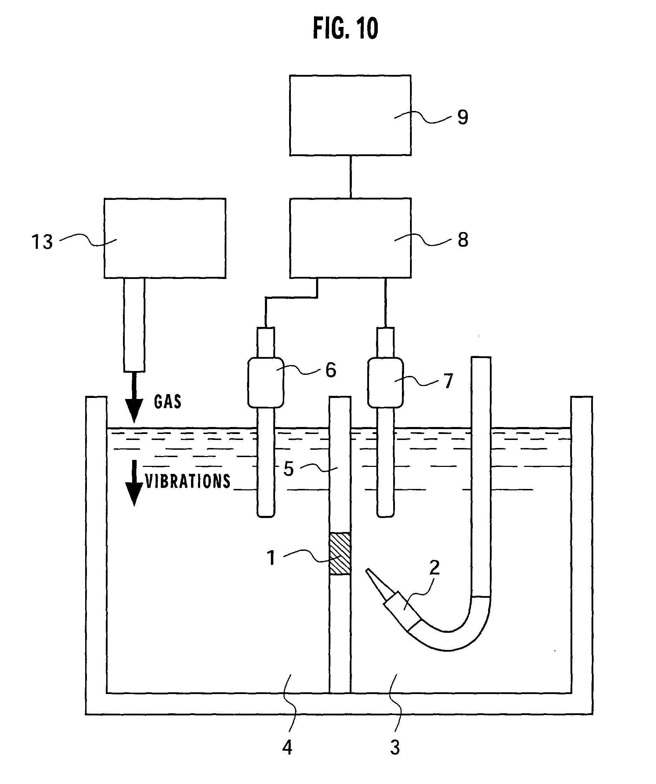

As shown in Fig. 10, a bilayer lipid membrane forming device according to the third embodiment includes a sample solution container (as a first solution container) 3 which contains a sample solution (as a first solution), a reference solution container (as a second solution container) 4 which contains a reference solution (as a second solution), a partition wall 5 which is located between the sample solution container 3 and the reference solution container 4, and has a hole, a mechanism (configured with e.g. a lipid solution ejection nozzle 2) which applies a lipid solution to the hole, a mechanism (configured with e.g. an electrode 6, an electrode 7, and a measuring unit 8) which measures a potential difference between the sample solution and the reference solution and detects dissolved substances in the sample solution, and a mechanism (configured with e.g. a gas jet device 13) which vibrates the sample solution or the reference solution. Fig. 10 shows a lipid membrane 1 prepared in the hole, which is initially thick, but transforms into a thin bilayer lipid membrane with a lapse of time.

Besides the component described above, a sample solution container 3, a reference solution container 4, a partition wall 5, a lipid solution ejection nozzle 2, an electrode 6, an electrode 7, a measuring unit 8, and a kind of bilayer lipid membrane are the same as those of the first embodiment. Thus, description thereof will be omitted herein.

A controller 9 controls the measuring unit 8 and the gas jet device 13. The gas jet device 13 blows out gas to a surface of the sample solution or the reference solution, and gives vibrations to the lipid membrane 1. With the gas jet device 13, jet pressure, jet amount, amount of time to blow out, blowing interval are automatically controlled. As shown in Fig. 10, the gas jet device 13 blows out gas towards the surface of the reference solution. The vibration energy given to the surface of the reference solution runs through the reference solution in the reference solution container 4 to the lipid membrane 1, and vibrates the lipid membrane 1. Here, the place, where the gas is blown out with the gas jet device 13, is not limited to the surface of the reference solution. The gas can be blown out to the surface of the sample solution when the vibrations finally vibrate the lipid membrane 1.

Furthermore, the place, where the gas is blown out to, is not limited to the surface of the sample solution and reference solution. The gas jet port can be dipped in the sample solution or the reference solution, and provide gas jet in the solution to vibrate the lipid membrane 1.

Concretely, jet pressure, jet amount, jet interval, and times of blowing out are not limited when vibrations are provided to the lipid membrane 1 to remove an excess lipid solution from the hole, every time gas is blown out to the surface of the reference solution and the sample solution. In other words, the control of the gas jet condition is not limited and can be adjusted according to the diameter of the hole, mixture ratio of lipid and solvents, kind of lipid and solvents, the sizes of bilayer lipid membrane, when it is ensured that the excess lipid solution can be removed in the experimental system.

The direction of the gas jet is not limited when the excess lipid solution can be removed. In the third embodiment, preferably, gas is blown out in a direction perpendicular or oblique to the sample solution and the reference solution.

As a gas, for example, atmospheric air, azote, carbonic anhydride, argon, and the like can be used, and it is not limited when vibrations are provide to the lipid membrane 1 through aqueous medium.

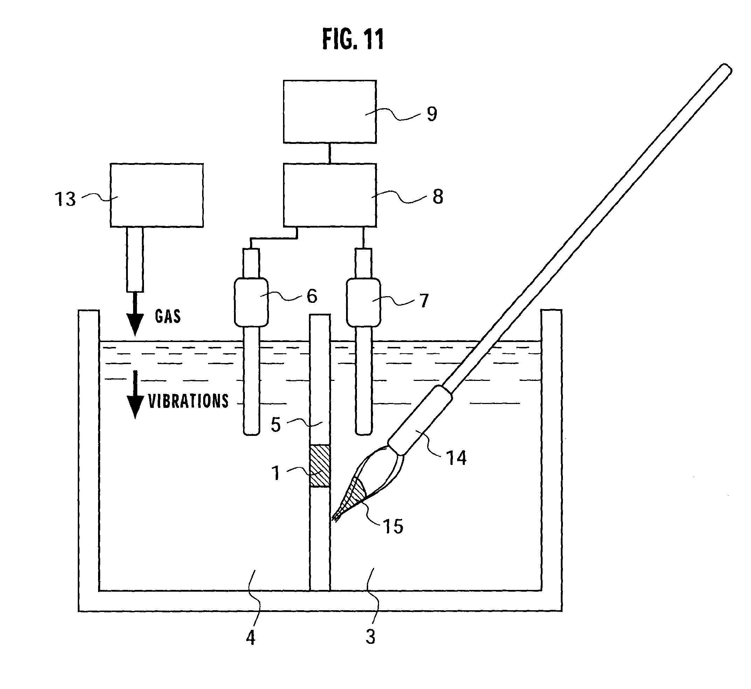

The bilayer lipid membrane forming device according to the third embodiment, as shown in Fig. 11, may include a lipid applying brush 14 as a mechanism for applying the lipid solution to the hole. A lipid solution 15 is adhered to the brush and applied directly to the hole by the lipid applying brush 14 to form the lipid membrane 1.

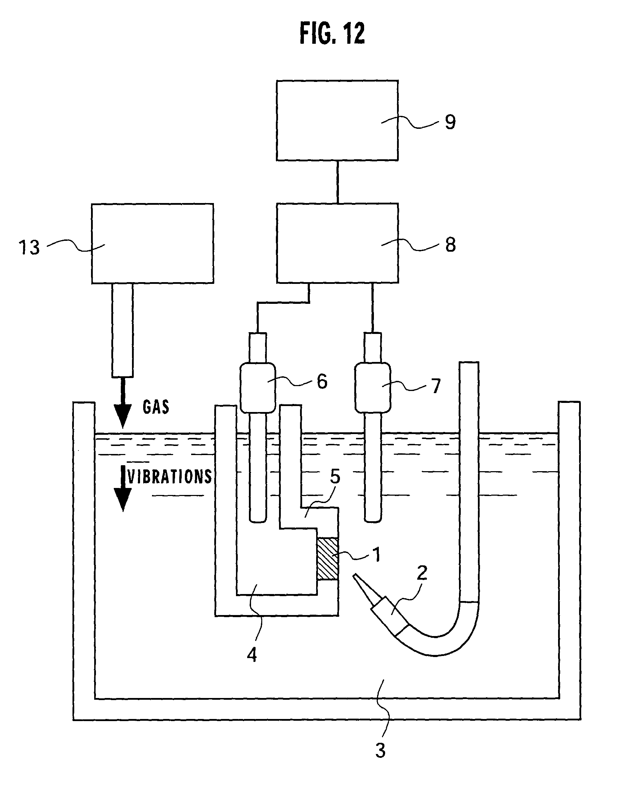

Furthermore, as shown in Fig. 12, the bilayer lipid membrane forming device according to the third embodiment may include the sample solution container 3 and the reference solution container 4 in different shapes. As shown in Fig. 12, the reference solution container 4 may be downsized and provided inside of the sample solution container 3.

### (Bilayer lipid membrane forming method)

Here, the bilayer lipid membrane forming method according to the third embodiment is described by referring to the Fig. 9.

Firstly, in step S301, a lipid solution is applied to the hole with the lipid solution ejection nozzle 2 or the lipid applying brush 14.

In step S302, a lipid membrane is manufactured in the hole. The measuring unit 8 detects that the lipid membrane 1 is manufactured by measuring potential changes with the electrode 6 and the electrode 7. The measuring unit 8 notifies to the controller 9 that a lipid membrane is prepared.

The controller 9 receives a signal from the measuring unit 8 and transmits a signal to the gas jet device 13 to start to drive. In step S303, the gas jet device 13 blows out gas in predetermined jet pressure, jet amount, jet time, and jet interval. For example, gas may be blown out to the surface of the sample solution or the reference solution at intervals of 0.1 to 1.0 second.

Then, in step S304, thinning of the lipid membrane is promoted. In step S305, a bilayer lipid membrane is formed.

The controller 9 receives a signal notifying that a bilayer lipid membrane is formed from the measuring unit 8, and transmits a signal to the gas jet device 13 to stop operation. The gas jet device 13 receives the signal from the controller 9 and stops blowing.

Furthermore, the formation of a lipid membrane and bilayer lipid membrane can be confirmed with an optical observation.

In Fig. 9, the operation is stopped after a bilayer lipid membrane is formed, however, the operation can be stopped when a multilayer lipid membrane is formed. In this case, after gas jet is stopped, a multilayer lipid membrane naturally transforms into a bilayer lipid membrane, and a bilayer lipid membrane is prepared.

### (Function and effect)

By use of the bilayer lipid membrane forming device and the bilayer lipid membrane forming method according to the third embodiment, in a course of removing the excess lipid solution by vibrating the lipid membrane 1, transforming a lipid membrane into bilayer lipid membrane can be promoted. In other words, a stable bilayer lipid membrane can be formed rapidly.

With a conventional procedure, it takes a number of minutes to several hours for transforming a lipid membrane into a bilayer lipid membrane. However, by use of a bilayer lipid membrane forming device according to the third embodiment, it takes a few seconds to a few minutes for transforming a lipid membrane into a bilayer lipid membrane through a state of a multilayer lipid membrane.

In the bilayer lipid membrane forming device and the bilayer lipid membrane forming method according to the third embodiment, vibrations are given to the sample solution or the reference solution, and the vibration energy runs through the partition wall 5 to the lipid membrane 1 to vibrate the lipid membrane 1.

In the bilayer lipid membrane forming device and the bilayer lipid membrane forming method according to the third embodiment, the vibration energy is transmitted to the lipid membrane 1 effectively, in a course of blowing out gas to the surface of the sample solution or the reference solution to vibrate the water surface.

### (OTHER EMBODIMENTS)

The present invention has been described according to the first to third embodiments described above. However, it should be understood that the present invention is not limited by the description and drawings, which constitute a part of this disclosure. Various alternative embodiments, embodiments and operational technologies will become apparent to those skilled in the art from this disclosure.

For example, in the first embodiment, it is explained that the pumps 10a and 10b, which generate a difference in pressure, are provided to both of the sample solution container 3 and the reference solution container 4. However, it is provided with one pump to one of the sample solution container 3 and the reference solution container 4 to generate a difference in pressure by changing the pressure of one of the sample solution and the reference solution.

Furthermore, in the bilayer lipid membrane forming device according to the first to third embodiments, the elements described in each embodiment can be provided in combination. For example, the bilayer lipid membrane forming device may be configured with both of the pumps 10a and 10b and the stroke element 11. The respective elements can be appropriately selected in accordance with the kind of the sample solution and measurement conditions.

Various modifications will become possible for those skilled in the art after receiving the teachings of the present disclosure without departing from the scope thereof.

### EXAMPLES

With various examples, the present invention will be further described in detail. It is noted that the present invention is not limited by the following examples.

### (EXAMPLE 1)

To confirm the effect of the bilayer lipid membrane forming device according to the first embodiment, a bilayer lipid membrane was formed with the bilayer lipid membrane forming device shown in Fig. 3.

Concretely, after the difference in pressure between the sample solution and the reference solution was set to 50 Pa, 2 µl of lipid solution was ejected to the hole which had a diameter of 400 µm. Then, the changes of the lipid membrane were observed.

### (Results)

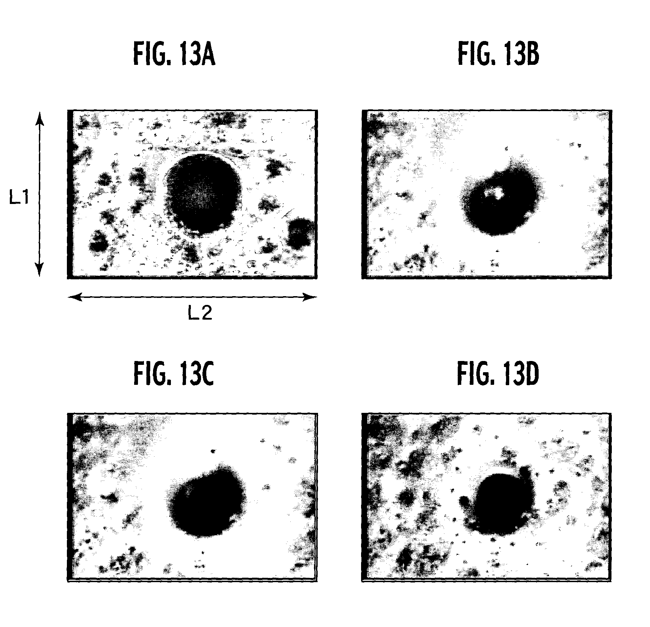

The results are shown in Figs. 13A to 13D, which are a series of photographs taken by an optical microscope. The photographs have a height L1 of 1 mm and a width L2 of 1.3 mm.

Fig. 13A shows a condition before the lipid solution was ejected. Fig. 13B shows a condition, 5 seconds passed after the lipid solution was ejected. Fig. 13C shows a condition, 10 seconds passed after the lipid solution was ejected. Fig. 13D shows a condition, 40 seconds passed after the lipid solution was ejected. In Fig. 13B, an iridescent pattern was observed, in other words, a multilayer lipid membrane was formed. In Fig. 13C, transforming into a bilayer lipid membrane started, and in Fig. 13D, it was confirmed that a bilayer lipid membrane spread over the hole.

Therefore, by use of the bilayer lipid membrane forming device according to the first embodiment, it was proven that a bilayer lipid membrane was formed in 40 seconds.

### (EXAMPLE 2)

To confirm the effect of the bilayer lipid membrane forming device according to the second embodiment, a bilayer lipid membrane was formed with the bilayer lipid membrane forming device shown in Fig. 8.

Concretely, after 2 µl of lipid solution was ejected to the hole which had a diameter of 400 µm, vibrations were given in a direction of perpendicular to the partition wall 5 by stroking, with a small sprung hammer, the wall of the reference solution container 4. The stroke strength was 1.3 x 10⁻³ N · m, the stroke interval was 1 second, and the number of stroke was 5 times. Here, the outside dimension of the bilayer lipid membrane forming device was about 40 mm x 30 mm x 50 mm. The changes of the lipid membrane were observed.

### (Results)

The results are shown in Figs. 14A to 14D, which are a series of photographs taken by an optical microscope. The photographs have a height L3 of 1 mm and a width L4 of 1.3 mm.

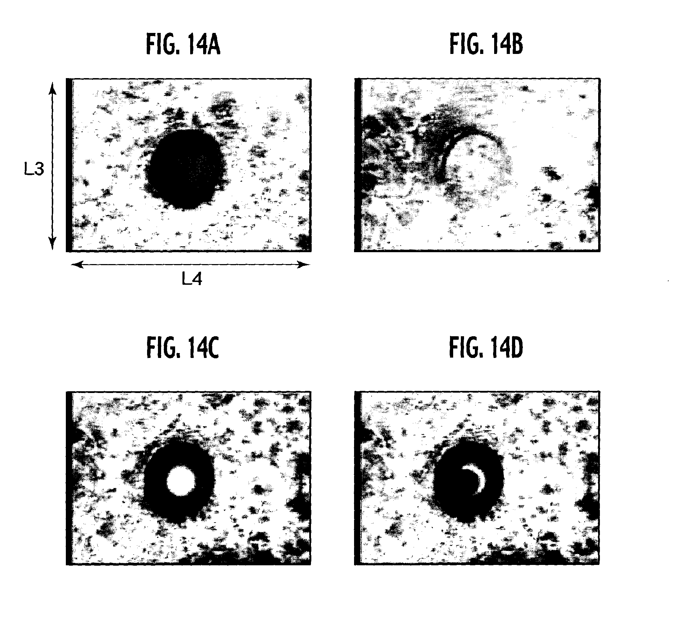

Fig. 14A shows a condition before the lipid solution was ejected. Fig. 14B shows a condition just after the lipid solution was ejected. Fig. 14C shows a condition, 30 seconds passed after the lipid solution was ejected. Fig. 14D shows a condition, 60 seconds passed after the lipid solution was ejected. The condition shown in Fig. 14B was a state of a thick lipid membrane was formed, and stroking was started in this condition. In the condition shown in Fig. 14C, an iridescent pattern was observed, in other words, a multilayer lipid membrane was formed, and the stroke was stopped in this condition. In the condition shown in Fig. 14D, transforming a multilayer lipid membrane to a bilayer lipid membrane started. Then, a bilayer lipid membrane spread over the hole when 65 seconds passed after the lipid solution is ejected.

Therefore, by use of the bilayer lipid membrane forming device according to the second embodiment, it was proven that a bilayer lipid membrane was formed in 65 seconds after a lipid solution is ejected.

### (EXAMPLE 3)

To confirm the effect of the bilayer lipid membrane forming device according to the third embodiment, a bilayer lipid membrane was formed with the bilayer lipid membrane forming device shown in Fig. 12.

Concretely, after 2 µl of lipid solution was ejected to the hole which had a diameter of 200 µm, gas was blown in a direction of perpendicular to the surface of the reference solution container 4, with a gas jet device 13. 4 to 11 Pa of air was blown about 2 ml each time, the interval was 1 seconds and the number of blowing was 5 times. Here, a solution, which volume is 0.3 ml, was used for the reference solution container 4. Then, the changes of the lipid membrane were observed.

### (Results)

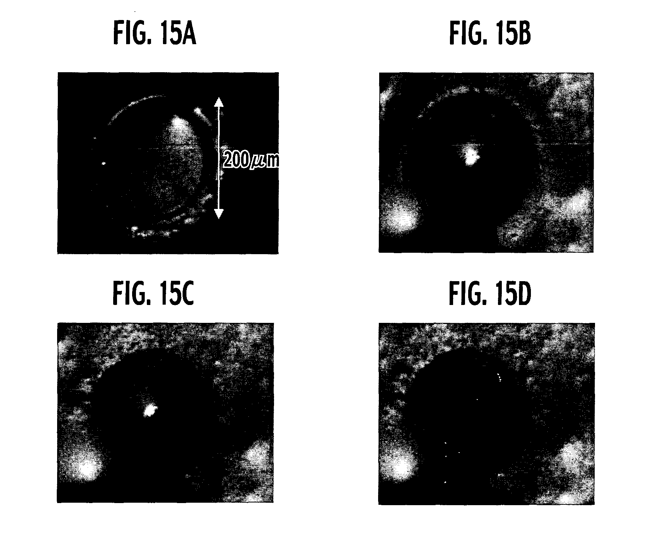

The results are shown Figs. 15A to 15D, which are a series of photographs taken by a camcorder through an optical microscope.

Fig. 15A shows a condition just after the lipid solution was ejected. In this condition, the membrane was a thick lipid membrane and did not change to a thin membrane when it is left untouched for 3 minutes. In the condition of the lipid membrane shown in Fig. 15A, gas was blown to the surface of the reference solution in the above condition. After 5 seconds, an iridescent membrane was formed in the middle of a thick membrane, as shown in Fig. 15B, and the iridescent membrane was formed of several layer of molecules. When 5 seconds had been passed after the iridescent membrane was formed, as shown in Fig. 15C, transforming into the bilayer lipid membrane (a black membrane) started from the bottom edge of the iridescent membrane. Then, after 3 seconds, as shown in Fig. 15D, the bilayer lipid membrane spread over the iridescent membrane.

Therefore, by use of the bilayer lipid membrane forming device according to the third embodiment, it was proven that a bilayer lipid membrane was formed in 13 seconds after gas was blown out.

## Claims

1. A device for forming a bilayer lipid membrane from a lipid membrane, comprising:
a first solution container which contains a first solution;
a second solution container which contains a second solution;
a partition wall which is located between the first solution container and the second solution container, and has a hole;
a mechanism which applies a lipid solution to the hole; and,
a mechanism which provides a physical stimulus to a lipid membrane formed in the hole.

2. The device of claim 1, wherein the mechanism which provides the physical stimulus generates a difference in pressure between the first solution and the second solution.

3. The device of claim 2, wherein the mechanism which provides the difference in pressure is a pump which introduces a solution to the first solution container or the second solution container, or discharges a solution from the first solution container or the second solution container.

4. The device of claim 1, wherein the mechanism which provides the physical stimulus is a vibrating mechanism which vibrates the lipid membrane.

5. The device of claim 4, wherein the vibrating mechanism vibrates to the first solution container or the second solution container.

6. The device of claim 5, wherein the vibrating mechanism vibrates in a direction of perpendicular or horizontal to the partition wall.

7. The device of claim 4, wherein the vibrating mechanism vibrates the first solution or the second solution.

8. The device of claim 7, wherein the vibrating mechanism blows out gas to the surface of the first solution or the second solution.

9. A device for forming a bilayer lipid membrane from a lipid membrane, comprising:
a first solution container which contains a first solution;
a second solution container which contains a second solution;
a partition wall which is located between the first solution container and the second solution container, and has a hole;
means for applying a lipid solution to the hole; and,
means for providing a physical stimulus to a lipid membrane formed in the hole.

10. A method for forming a bilayer lipid membrane from a lipid membrane, comprising:
applying a lipid solution to a partition wall which is located between a first solution container which contains a first solution and a second solution container which contains a second solution, and has a hole; and,
providing a physical stimulus to a lipid membrane formed in the hole.

11. The method of claim 10, wherein providing the physical stimulus by generating a difference in pressure between the first solution and the second solution.

12. The method of claim 11, wherein the difference in presser between the first solution and the second solution is provided by generating a difference in water level of the first solution and the second solution.

13. The method of claim 10, wherein providing the physical stimulus to vibrate the lipid membrane.

14. The method of claim 13, wherein vibrating the lipid membrane by generating vibrations on the first solution container or the second solution container.

15. The method of claim 14, wherein vibrating the lipid membrane by generating vibrations in a direction of perpendicular or horizontal to the partition wall.

16. The method of claim 13, wherein vibrating the lipid membrane by generating vibrations to the first solution or the second solution.

17. The method of claim 16, wherein vibrating the lipid membrane by blowing gas to the surface of the first solution or the second solution.
